# EUROPÄISCHE PATENTSCHRIFT

(11) **EP 1 273 097 B1**
(45) Veröffentlichungstag und Bekanntmachung des Hinweises auf die Patenterteilung: **27.10.2004**
(21) Anmeldenummer: 01931520.9
(22) Anmeldetag: 14.03.2001
(51) Int. Cl.: H02P 3/24

(54) **BREMSMODUL**
BRAKE MODULE
MODULE DE FREINAGE

(30) Priorität: 23.03.2000 DE 10014174
(43) Veröffentlichungstag der Anmeldung: 08.01.2003
(73) Patentinhaber: Wilhelm Altendorf GmbH & Co. KG, D-32429 Minden (DE); Peter electronic GmbH & Co. KG, 92348 Berg (DE)
(72) Erfinder: ALTENDORF, Wilfried, 32429 Minden (DE); BARNER, Karsten, 32429 Minden (DE); STILLER, Thomas, 90480 Nürnberg (DE); KIRSCH, Franz, 91227 Leinburg (DE)
(74) Vertreter: Eisenführ, Speiser & Partner
(86) Internationale Anmeldenummer: PCT/EP2001/002854
(87) Internationale Veröffentlichungsnummer: WO 2001/071902

(56) Entgegenhaltungen:
- EP-A- 0 153 484
- DE-A- 3 414 015
- US-A- 5 374 885
- PLACHETKA S: "MIT ODER GEGEN DEN STROM DREHSTROMMOTOREN SICHER BREMSEN" ELEKTROTECHNIK, VOGEL VERLAG K.G. WURZBURG, DE, Bd. 76, Nr. 6, 13. Juni 1994 (1994-06-13), Seiten 30-32, XP000438395 ISSN: 1431-9578
- PLACHETKA S: "ZUVERLAESSIGE ABBREMSUNG VON DREHSTROMMOTOREN, TEIL 2" UND- ODER- NOR + STEUERUNGSTECHNIK, DISTRIBUTION VERLAG GMBH. MAINZ, DE, Bd. 25, Nr. 5, 1. Mai 1992 (1992-05-01), Seiten 26-27, XP000304462

## Beschreibung

Die Erfindung betrifft ein Bremsmodul für einen Asynchronmotor, insbesondere für einen in einer Kreissäge zum Antrieb des Sägeblatts verwendeten Asynchronmotor. Außerdem betrifft die Erfindung ein entsprechendes Verfahren zum Abbremsen eines Asynchronmotors.

Zum Abbremsen des Sägeblatts einer Kreissäge sind verschiedene Möglichkeiten bekannt. Bei einer sogenannten Federdruck-Einscheibenbremse wird zum Abbremsen eine Reibscheibe gegen einen Motorflansch gedrückt, so dass das Sägeblatt durch mechanische Reibung gebremst wird.

Weiter sind verschiedene Methoden zum elektrischen Abbremsen des in Kreissägen im allgemeinen zum Antrieb des Sägeblatts verwendeten Asynchronmotors bekannt, wie insbesondere das sogenannte Gleichstrombremsen und das Gegenstrombremsen. Beim Gleichstrombremsen werden die Statorwicklungen - häufig auch Ständerwicklungen genannt - des Asynchronmotors von der Betriebsspannungsversorgung, die in der Regel drei Drehstromleitungen aufweist, abgetrennt, und es wird an zwei Statorwicklungen eine Gleichspannung angelegt. Durch den in diesen Statorwicklungen fließenden Gleichstrom wird im Innern des Rotors ein magnetisches Gleichfeld erzeugt, wodurch aufgrund der Drehbewegung des Rotors des Asynchronmotors - häufig auch Läufer genannt - in den Rotorwicklungen eine Spannung induziert wird. Der sich einstellende Rotorstrom bildet mit dem magnetischen Gleichfeld dann das Bremsmoment zum Abbremsen des Asynchronmotors.

Zum Gegenstrombremsen wird der Motor vom Drehstromnetz abgeschaltet und nach Umpolen der Zuleitungen zweier Statorwicklungen wieder angeschlossen. Dadurch kehrt sich die Drehrichtung des magnetischen Drehfeldes um, während die Drehrichtung des Rotors zunächst erhalten bleibt. Da der Asynchronmotor dabei gegen das Drehfeld betrieben wird, fließt ein großer Rotorstrom, und der Rotor versucht, seine Drehrichtung zu ändern, um dem Drehfeld zu folgen. Der Rotor wird somit nach dem Abbremsen, sofern bei Erreichen der Drehizahl Null keine Abschaltung erfolgt, die Drehrichtung ändern.

Da bei einer Kreissäge sehr unterschiedliche Massenträgheitsmomente auftreten bedingt durch verschiedene Drehzahlen (3000 bis 6000 U/min) und verschiedene Sägeblattdurchmesser (250 bis 450 mm), werden an ein Bremsmodul hohe Anforderungen gestellt. Der Bremsvorgang muss trotz der unterschiedlichen Massenträgheitsmomente sanft und geräuscharm ablaufen und darf nicht abrupt sein. Die bekannten Bremsmodule erfüllen diese Forderungen nicht. Mechanische Bremsen sind laut, schwer steuerbar und verschleißbehaftet. Elektrische Bremsmodule, die nach der Gleichstrombremsmethode bremsen, verwenden einen fest eingestellten Bremsstrom, so dass die Bremsung abhängig von dem abzubremsenden Massenträgheitsmoment zu schnell oder zu langsam ist. Bremsmodule, die nach der Methode der Gegenstrombremse arbeiten, sind ebenfalls nicht steuerbar abhängig von dem Massenträgheitsmoment und bremsen zudem sehr abrupt ab.

Aus der EP 0 153 484 A1 ist ein Verfahren und eine Vorrichtung zum Bremsen von Asynchronmotoren bekannt. Dabei wird in einem Einschaltzeitpunkt nach einem Trennen des Motors vom Drehstromnetz mindestens einer der Motorenwicklungen ein Bremsgleichstrom zugeführt. Um die Bremsgenauigkeit von durch Gleichstrom bremsbaren Asynchronmotoren zu verbessern, ohne dass der Motor durch höhere Ströme stärker belastet wird, liegt der Einschaltzeitpunkt zwischen frühestens einem ersten Referenzzeitpunkt und spätestens einem zweiten Referenzzeitpunkt, wobei im ersten Referenzzeitpunkt die Bremsgleichspannung einer Rückspannung der Motorenwicklungen im wesentlichen gleich ist und der zweite Referenzzeitpunkt um einen Betrag von 5% der vollen Schwingungsdauer der Netzspannung vor dem dem ersten Referenzzeitpunkt nächstfolgenden Scheitelpunkt des zeitlichen Verlaufs der Rückspannung liegt. Im Einschaltzeitpunkt ist die Polarität der Bremsgleichspannung umgekehrt zur Polarität, zu der die Rückspannung im ersten Referenzzeitpunkt hinstrebt.

Der Erfindung liegt deshalb die Aufgabe zugrunde, ein Bremsmodul für einen Asynchronmotor, insbesondere für eine Kreissäge mit einem Asynchronmotor zum Antrieb des Sägeblatts, zu schaffen, das ein sanftes und geräuscharmes Abbremsen ermöglicht. Diese Aufgabe wird erfindungsgemäß durch ein Bremsmodul gemäß Anspruch 1 gelöst.

Die Erfindung geht dabei von der Erkenntnis aus, dass mittels einer an mindestens einer Statorwicklung gemessenen Remanenzspannung der Bremsstrom, der durch die mit Gleichspannung beaufschlagten Statorwicklungen fließt, so gesteuert werden kann, dass ein sanftes Abbremsen erreicht wird. Unter Remanenzspannung ist dabei die an einer Statorwicklung anliegende Spannung zu verstehen, die von dem sich im Magnetfeld des Stators drehenden Rotor in den Statorwicklungen induziert wird. Diese wird im allgemeinen auch als Gegen-EMK (elektromotorische Kraft) bezeichnet. Abhängig von dieser Remanenzspannung, die einmal oder mehrmals während des Abbremsvorganges gemessen werden kann, kann der Bremsstrom so eingestellt bzw. gesteuert werden, dass der Asynchronmotor in einer vorgegebenen Bremszeit gebremst wird unabhängig davon, wie groß das Massenträgheitsmoment des von dem Asynchronmotor angetriebenen Elements ist. Die bei Kreissägen bestehende Forderung der Vorschrift EN1870-1 gemäß der die Bremszeit kleiner 10 Sekunden sein muss, kann mit einem erfindungsgemäßen Bremsmodul bei unterschiedlichen Massenträgheitsmomenten, also unterschiedlichen Sägeblättern mit unterschiedlichen Durchmessern und/oder Massen und/oder Drehzahlen, erfüllt werden. In praktischen Realisierungen wurden Bremszeiten zwischen 3 und 9 Sekunden erreicht.

Vorteilhafte Ausgestaltungen des erfindungsgemäßen Bremsmoduls sind in den Unteransprüchen angegeben.

Bei der besonders vorteilhaften Ausgestaltung gemäß Anspruch 3 werden vorab für unterschiedliche Asynchronmotoren, die unterschiedliche Motorleistungen und/oder Betriebsspannungen aufweisen, und/oder für unterschiedliche anzutreibende Elemente, z. B. für unterschiedliche Sägeblätter, die unmittelbar vor oder beim Abbremsen auftretenden Remanenzspannungen gemessen und geeignete Bremsprogramme ermittelt. In solchen Bremsprogrammen ist festgelegt, wie ein bestimmter Motor bzw. ein bestimmtes anzutreibendes Element abgebremst werden muss, um eine sanfte Bremsung zu erreichen, d. h. mit welchen Bremsströmen gebremst werden muss. Diese Bremsprogramme sind in einem Speicher abgelegt und können während des Betriebs abgerufen werden. Die Auswahl des Bremsprogramms hängt dabei von dem verwendeten Motor, was als Einstellung in dem Bremsmodul voreingestellt sein kann, und/oder der unmittelbar vor oder beim Bremsen gemessenen Remanenzspannung ab.

Bei der vorteilhaften Weiterbildung gemäß Anspruch 4 wird alternativ nicht abhängig von dem verwendeten Motor und/oder der gemessenen Remanenzspannung ein ganzes Bremsprogramm ausgewählt, das die Steuerung des Bremsstromes während der gesamten Bremszeit enthält, sondern es wird nur abhängig von der gerade aktuell gemessenen Remanenzspannung aus einem Speicher der dafür geeignete Bremsstrom ausgewählt. Da die Messung der Remanenzspannung mehrfach erfolgen kann in bestimmten Zeitabständen, kann dabei nach jeder Messung wieder individuell der Bremsstrom ideal eingestellt werden.

Gemäß der alternativen Ausgestaltung nach Anspruch 6 kann die Einstellung des Bremsstromes auch adaptiv in Abhängigkeit von der aktuell gemessenen Remanenzspannung erfolgen. Dies heißt, dass es nicht erforderlich ist, vor Inbetriebnahme unterschiedliche Motoren und/oder unterschiedliche Massenträgheitsmomente auszumessen, um geeignete Bremsprogramme oder die erforderlichen Bremsströme zu bestimmen und diese in einem Speicher tabellarisch abzulegen. Vielmehr wird adaptiv während des Bremsvorganges mehrfach die Remanenzspannung gemessen und daraus und gegebenenfalls aus den eingestellten Motordaten bestimmt, wie groß der Bremsstrom sein muss, um das gewünschte Abbremsverhalten zu erreichen. Dazu ist erfindungsgemäß ein geeigneter Regelkreis vorgesehen.

Gemäß der vorteilhaften Ausgestaltung nach Anspruch 7 wird die Gleichspannung, die zum Abbremsen an mindestens zwei Statorwicklungen angelegt wird, aus der Betriebsspannung, d. h. in der Regel aus einer Wechselspannung, durch Gleichrichtung erzeugt. Vor Einleitung des Bremsvorgangs wird gemäß dieser Ausgestaltung die Remanenzspannung an einer Statorwicklung gemessen und geprüft, ob die Amplitude der Remanenzspannung unter einer vorgegebenen Schwelle liegt und ob die Polarität der Remanenzspannung zur Freilaufdiode richtig ist. Sind diese Bedingungen erfüllt, wird die Bremsung eingeleitet, indem die Gleichspannung angelegt wird.

Die Erfindung betrifft auch eine Kreissäge, insbesondere eine Formatkreissäge, die ein erfindungsgemäßes Bremsmodul aufweist. Außerdem betrifft die Erfindung auch ein Verfahren zum Abbremsen eines Asynchronmotors, das in Anspruch 13 angegeben ist. Diese Kreissäge und dieses Verfahren können erfindungsgemäß und in entsprechender Weise wie das Bremsmodul weitergebildet sein.

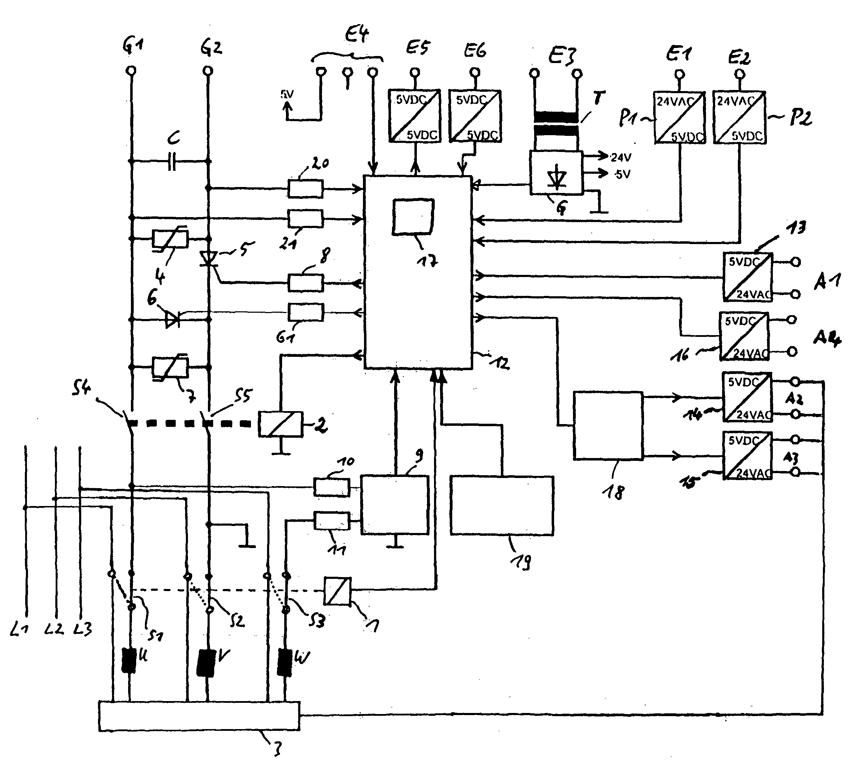

Die Erfindung wird nachfolgend anhand des in der Figur gezeigten Blockschaltbildes eines erfindungsgemäßen Bremsmoduls für eine Kreissäge näher erläutert.

Eine Kreissäge weist im allgemeinen einen Asynchronmotor auf, dessen drei Statorwicklungen U, V, W in dem Blockschaltbild gezeigt sind. Diese werden im Betriebsfall von einem Drehstromnetz mit drei Drehstromleitungen L1, L2, L3 gespeist, wozu die Schalter S1, S2, S3 in der punktiert gezeigten Stellung sind. Um den Asynchronmotor in Stern- und Dreieckschaltung betreiben zu können, sind Schaltmittel 3 vorgesehen, die von einer zentralen Steuereinheit 12 über ein Stern-Schütz und ein Dreieck-Schütz (Ausgänge A2, A3) mit (nicht gezeigten) Schaltmitteln gesteuert werden. Zum Abbremsen des Motors werden die Wicklungen U, V, W von den Leitungen L1, L2, L3 getrennt, indem die Schalter S1, S2, S3 mittels eines von der Steuereinheit 12 gesteuerten Relais 1 in die gezeigte Stellung gebracht werden.

im Bremsfall wird an die Statorwicklungen U, V eine Gleichspannung angelegt, wozu die Schalter S4, S5 mittels eines von der Steuereinheit 12 gesteuerten Bremsrelais geschlossen werden. Dazu kann eine von einer bekannten Gleichstromquelle gelieferte Gleichspannung verwendet werden, wobei der durch die Statorwicklungen U, V fließende Bremsstrom steuerbar sein muss. Alternativ kann wie im gezeigten Fall aber auch eine Wechselspannung verwendet werden, beispielsweise von den Leitungen L1 und L2 des Drehstromnetzes, die an den Anschlüssen G1, G2 anliegt und in eine gleichgerichtete Spannung umgewandelt wird. Dazu sind im vorliegenden Fall ein Kondensator C, zwei Varistoren 4, 7 und ein über einen Widerstand 61 von der Steuereinheit 12 steuerbarer Thyristor 6 (oder alternativ auch eine Freilaufdiode) vorgesehen. Diese bewirken auch eine Kappung von Spannungsspitzen.

Zur Steuerung des Bremsstromes ist in der Verbindungsleitung zwischen dem Anschluss G2 und der Statorwicklung V ein weiterer Thyristor 5 vorgesehen, der über einen Widerstand 8 von der Steuereinheit 12 gesteuert werden kann. Dadurch lässt sich der durch diese Leitung fließende Bremsstrom, insbesondere dessen Stromstärke und Dauer, steuern, was Einfluss auf die Stärke und Zeitdauer des Bremsstromes hat.

Weiter ist am Eingang E1 ein Ein-/Ausschalter angeschlossen, der über eine Potentialtrennung P1 mit der Steuereinheit 12 verbunden ist. Am Eingang E2 ist ein Motorschütz angeschlossen, das ebenfalls über eine Potentialtrennung P2 mit der Steuereinheit 12 verbunden ist. Am Eingang E3 liegt eine Wechselspannungsversorgung, z. B. 24V AC, an, von der über einen Transformator T und einen Gleichrichter G die Steuereinheit 12 und andere Elemente mit Gleichspannung versorgt werden. Am Eingang E4 liegt ein Element zur Temperaturerfassung der Motorwicklung an, z. B. ein PTC, der zum Schutz des Motors vor Überhitzung verwendet wird. Dieser Eingang E4 ist so ausgestaltet, dass auch ein zweiter Motor angekoppelt werden kann.

Desweiteren sind serielle Schnittstellen E5, E6 als Kommunikationsschnittstellen zum bidirektionalen Datenaustausch mit der Maschinensteuerung vorgesehen. Dadurch kann auch eine Fehleranzeige des Bremsmoduls realisiert werden, um bei einigen Fehlern ein Starten des Motors überhaupt zu verhindern, was insbesondere bei einem Sägemotor von Bedeutung ist. Außerdem kann über diese Schnittstellen E5, E6 eine automatische Anpassung der Bremsparameter über einen Datenaustausch mit der Maschinensteuerung an den jeweiligen Werkzeugdurchmesser erfolgen, so dass immer ein sanftes Abbremsen gewährleistet ist.

An den Ausgängen A1 bis A4, die jeweils über ein (nicht gezeigtes) Schaltelement, z. B. über ein Relais und/oder eine Sicherung, und jeweils eine Potentialtrennung 13 und 16 mit der Steuereinheit 12 verbunden sind, liegen unterschiedliche Schutzeinrichtungen an, wie insbesondere eine Motorschützverriegelung (Ausgang A1), ein Stern-Schütz (A2), ein Dreieck-Schütz (A3) und ein Temperatur-Schütz (A4). Zur Auswahl des Stern- bzw. Dreieck-Schützes und zum geeigneten Anlauf ist ein entsprechendes Stern-Dreieck-Anlaufmodul 18 vorgesehen. Mittels eines Brückenfeld-Motorauswahlblocks 19, der mit der Steuereinheit 12 gekoppelt ist, kann außerdem eine grobe Parametervorauswahl für bestimmte Leistungen getroffen werden.

Zur Erfassung der Remanenzspannung ist eine Messeinheit 9 vorgesehen, die mit der Steuereinheit 12 verbunden ist. Von dieser Messeinheit 9 kann über einen Widerstand 10 die Remanenzspannung an der Statorwicklung U und über einen Widerstand 11 an der Statorwicklung W gemessen werden.

Der Bremsvorgang bei dem erfindungsgemäßen Bremsmodul soll nachfolgend näher erläutert werden. Die Motorleistung und die Betriebsspannung des Motors wird in der Steuereinheit 12 auf geeignete Weise eingestellt oder abgespeichert. Wenn der Bremsvorgang durch Betätigung des Ausschalters der Säge eingeleitet werden soll, fällt zunächst das (nicht gezeigte) Netzschütz in Ruhelage. Dabei werden die Statorwicklungen U, V, W vom Drehstromnetz L1, L2, L3 durch Umlegen der Schalter S1, S2, S3 getrennt. Sobald die Ruhelage des Netzschütz erkannt ist, wird von der Messeinrichtung 9 über den Widerstand 10 die Remanenzspannung an der Statorwicklung U gemessen. Die Phasenlage und die Amplitude der Remanenzspannung wird dabei in der Steuereinheit 12 ausgewertet. Sofern die Amplitude der Remanenzspannung unter einer vorgegebenen Schwelle (z. B. kleiner 70 Volt) ist und die Phasenlage der Remanenzspannung mit der Polarität des Thyristors 6 übereinstimmt, wird der Bremsvorgang gestartet, wozu die Schalter S4 und S5 geschlossen werden. Außerdem wird dabei die Stern-Stufe aktiviert, d. h. die Statorwicklungen U, V, W werden in Sternschaltung betrieben.

Das Bremsprogramm, das gefahren werden soll, wird abhängig von der voreingestellten Motorleistung und Betriebsspannung aus einer in einem Speicher 17 der Steuereinheit 12 abgelegten Tabelle ausgewählt. Dort sind verschiedene Bremsprogramme für verschiedene Motoren tabellarisch abgelegt. Der Bremsstrom wird dabei zunächst auf eine erste vorgegebene Höhe über eine Rampe hochgefahren. Dieser Bremsstrom steht dann solange an, bis eine erste Schwelle der Remanenzspannung erreicht ist. Das Erreichen dieser Schwelle wird von der Messeinrichtung 9 über den Widerstand 11 an der nicht mit Gleichspannung beaufschlagten Stator wicklung W überwacht, an der die Remanenzspannung gemessen wird. Wenn die erste Schwelle der Remanenzspannung erreicht ist, wird der Bremsstrom auf einen zweiten vorgegebenen Bremsstrom heruntergefahren, bis eine zweite Schwelle der Remanenzspannung an der Statorwicklung W erreicht ist. Diese stufenweise Herabsetzung des Bremsstromes abhängig von Schwellwerten der Remanenzspannung kann je nach gewünschter Stufenhöhe und Anzahl von Stufen beliebig oft erfolgen, bis eine nicht gezeigte Stillstandsüberwachung den Stillstand des Motors meldet.

Mit dem erfindungsgemäßen Bremsmodul kann eine sanfte und geräuscharme Bremsung innerhalb einer vorgegebenen Bremszeit unabhängig von dem Massenträgheitsmoment des gerade angetriebenen Elements erreicht werden.

Das erfindungsgemäße Bremsmodul kann auch so ausgestaltet sein, dass nicht in einem Speicher 17 bestimmte Bremsprogramme abgelegt sind, sondern nur Bremsströme abhängig von gemessenen Remanenzspannungen. Während des Bremsbetriebes wird dann in bestimmten Zeitabständen jeweils die Remanenzspannung gemessen und aus der im Speicher 17 abgelegten Tabelle jeweils der dazu geeignete Bremsstrom gelesen, der dann über den Widerstand 8 am Thyristor 5 eingestellt wird.

Weiter kann auch eine adaptive Regelung vorgesehen sein, bei der der Speicher 17 und die vorherige Bestimmung von Bremsströmen und/oder Bremsprogrammen für unterschiedliche Motoren und/oder Remanenzspannungen entfallen kann. Dabei wird aus der gemessenen Remanenzspannung nach einem geeigneten Algorithmus der erforderliche Bremsstrom ermittelt, der über den Thyristor einzustellen ist. In diesen Algorithmus kann dann auch die Motorleistung und die gewünschte Bremszeit mit einfließen.

In der gezeigten Ausgestaltung sind außerdem zwei Widerstände 20, 21 für eine zusätzliche Spannungs- und Phasenüberwachung vorgesehen. Diese Widerstände 20, 21 sind an die Verbindungsleitung zwischen dem Anschluss G1 und der Phase U bzw. zwischen dem Anschluss G2 und der Phase V angeschlossen und führen zur Steuereinheit 12. Einerseits kann damit überprüft werden, wie hoch die vorhandene Spannung ist, um aus der gemessenen Spannungshöhe eine Bremskurvenkorrektur vorzunehmen. Damit kann ein zusätzlicher Eingriff auf die anhand der gemessenen Remanenzspannung eingestellte Bremskurve vorgenommen werden.

Zusätzlich kann mittels dieser Widerstände 20, 21 auch eine Phasenüberwachung in den genannten Verbindungsleitungen realisiert werden. Bei falscher Phasenlage der dort anliegenden Spannung oder bei überhaupt fehlender Phase kann somit beispielsweise ein Hochlaufen des Motors gänzlich verhindert werden.

Die Erfindung ist nicht auf das gezeigte Ausführungsbeispiel beschränkt. Vielmehr sind hinsichtlich der konkreten Ausgestaltungen zahlreiche Variationen denkbar. Insbesondere kann der Asynchronmotor mehr als drei Statorwicklungen aufweisen oder als einphasiger Motor ausgestaltet sein. Auch die Erzeugung der Gleichspannung und die dazu verwendeten Elemente und die Elemente zur Bremsstromeinstellung und zur Messung der Remanenzspannung können variiert sein.

## Patentansprüche

1. Bremsmodul für einen Asynchronmotor mit Schaltmitteln S1,S2,S3) zum Abtrennen der Statorwicklungen (U, V, W) des Asynchronmotors von der Betriebsspannungsversorgung (L1,L2,L3) und zum Anlegen einer Gleichspannung an mindestens zwei Statorwicklungen (U, V) zum Abbremsen des Asynchronmotors, mit einer Messeinheit (9) zur Messung einer Remanenzspannung an mindestens einer nicht mit Gleichspannung beaufschlagten Statorwicklung (W) und mit einer Steuereinheit (12) zur Steuerung eines zum Abbremsen durch die mit Gleichspannung beaufschlagten Statorwicklungen (U, V) fließenden Bremsstromes in Abhängigkeit von der gemessenen Remanenzspannung.

2. Bremsmodul nach Anspruch 1,
**dadurch gekennzeichnet, dass** zur Steuerung des Bremsstromes die Messeinheit (9) ausgestaltet ist zur Messung der Remanenzspannung in regelmäßigen Zeitabständen.

3. Bremsmodul nach einem der vorhergehenden Ansprüche,
**dadurch gekennzeichnet, dass** die Steuereinheit (12) ausgestaltet ist zur Steuerung des Bremsstromes entsprechend einem in einem Speicher (17) abgelegten, vorab für unterschiedliche Asynchronmotoren und/oder anzutreibende Elemente ermittelten Bremsprogramms, wobei das Bremsprogramm abhängig von der gemessenen Remanenzspannung und/oder der eingestellten Motorleistung gewählt wird.

4. Bremsmodul nach einem der vorhergehenden Ansprüche,
**dadurch gekennzeichnet, dass** die Steuereinheit (12) ausgestaltet ist zur Auswahl des im Speicher (17) für unterschiedliche Remanenzspannungen abgelegten Bremsstromes abhängig von der aktuell gemessenen Remanenzspannung.

5. Bremsmodul nach einem der vorhergehenden Ansprüche,
**dadurch gekennzeichnet, dass** die Steuereinheit (12) ausgestaltet ist zur stufenweisen Veränderung des Bremsstromes.

6. Bremsmodul nach einem der vorhergehenden Ansprüche,
**dadurch gekennzeichnet, dass** die Steuereinheit (12) ausgestaltet ist adaptiven Einstellung des Bremsstromes in Abhängigkeit von der aktuell gemessenen Remanenzspannung.

7. Bremsmodul nach einem der vorhergehenden Ansprüche,
**dadurch gekennzeichnet, dass** die Steuereinheit (12) ausgestaltet ist zur Messung der Remanenzspannung an einer ersten Statorwicklung (W) vor Einleitung des Bremsvorgangs und dass die Schaltmittel (S1, S2, S3) ausgestaltet sind zum Abtrennen der Statorwicklungen (U, V, W) von der Betriebsspannungsversorgung (L1, L2, L3) und zum Anlegen einer aus der Betriebsspannung erzeugten gleichgerichteten Gleichspannung bei Übereinstimmung der Phasenlage der Remanenzspannung und der zur Erzeugung der Gleichspannung verwendeten Betriebsspannung.

8. Bremsmodul nach einem der vorhergehenden Ansprüche,
**dadurch gekennzeichnet, dass** Mittel (3) zur Stillstandsüberwachung, zur Stem-Dreieck-Umschaltung und zur Überwachung der Wicklungstemperatur des Motors in das Bremsmodul integriert sind.

9. Bremsmodul nach einem der vorhergehenden Ansprüche,
**dadurch gekennzeichnet, dass** die Steuereinheit (12) derart ausgestaltet ist, dass der Motor in weniger als 10 Sekunden abgebremst wird.

10. Bremsmodul nach einem der vorstehenden Ansprüche,
**dadurch gekennzeichnet, dass** das Bremsmodul mit einem Sanftanlaufmodul in eine kompakte Einheit integriert ist.

11. Bremsmodul nach einem der vorstehenden Ansprüche,
**dadurch gekennzeichnet, dass** Mittel (5) zur Bremsstromkorrektur und/oder zur Phasenüberwachung vorgesehen sind.

12. Kreissäge, insbesondere Formatkreissäge, mit einem Bremsmodul nach einem der vorhergehenden Ansprüche.

13. Verfahren zum Abbremsen eines Asynchronmotors,
wobei zum Abbremsen die Statorwicklungen (U, V, W) des Asynchronmotors von der Betriebsspannungsversorgung (L1,L2,L3) abgetrennt und eine Gleichspannung an mindestens zwei Statorwicklungen (U, V) angelegt wird, wobei eine Remanenzspannung an mindestens einer nicht mit Gleichspannung beaufschlagten Statorwicklung (W) gemessen wird und wobei ein zum Abbremsen durch die mit Gleichspannung beaufschlagten Statorwicklungen (U, V) fließender Bremsstrom in Abhängigkeit von der gemessenen Remanenzspannung gesteuert wird.

## Claims

1. Brake module for an asynchronous motor having switching means (51, 52, 53) for isolating the stator windings (U, V, W) of the asynchronous motor from the operating voltage supply (L1, L2, L3) and for applying a DC voltage to at least two stator windings (U, V) for the purpose of braking the asynchronous motor, having a measuring unit (9) for measuring a residual voltage across at least one stator winding (W), which does not have a DC voltage applied to it, and having a control unit (12) for controlling a braking current flowing for braking purposes through the stator windings (U, V), which have a DC voltage applied to them, as a function of the measured residual voltage.

2. Brake module according to Claim 1, **characterized in that**, for the purpose of controlling the braking current, the measuring unit (9) is designed to measure the residual voltage at regular time intervals.

3. Brake module according to one of the preceding claims, **characterized in that** the control unit (12) is designed to control the braking current depending on a braking program stored in a memory (17) and previously determined for different asynchronous motors and/or elements to be driven, the braking program being selected as a function of the measured residual voltage and/or the set motor rating.

4. Brake module according to one of the preceding claims, **characterized in that** the control unit (12) is designed to select the braking current stored in the memory (17) for different residual voltages as a function of the currently measured residual voltage.

5. Brake module according to one of the preceding claims, **characterized in that** the control unit (12) is designed to alter the braking current in a stepped manner.

6. Brake module according to one of the preceding claims, **characterized in that** the control unit (12) is designed to adaptively adjust the braking current as a function of the currently measured residual voltage.

7. Brake module according to one of the preceding claims, **characterized in that** the control unit (12) is designed to measure the residual voltage across a first stator winding (W) before the braking procedure is introduced, and **in that** the switching means (51, 52, 53) are designed to isolate the stator windings (U, V, W) from the operating voltage supply (L1, L2, L3) and to apply a rectified DC voltage produced from the operating voltage when there is correspondence between the phase angle of the residual voltage and the operating voltage used to generate the DC voltage.

8. Brake module according to one of the preceding claims, **characterized in that** means (3) for steady-state monitoring, for star-delta changeover, and for monitoring the winding temperature of the motor are integrated in the brake module.

9. Brake module according to one of the preceding claims, **characterized in that** the control unit (12) is designed such that the motor is braked in less than 10 seconds.

10. Brake module according to one of the preceding claims, **characterized in that** the brake module is integrated with a reduced-voltage starting module in a compact unit.

11. Brake module according to one of the preceding claims, **characterized in that** means (5) are provided for correcting the braking current and/or for phase monitoring.

12. Circular saw, in particular a sizing circular saw, having a brake module according to one of the preceding claims.

13. Method for braking an asynchronous motor, in which, for braking purposes, the stator windings (U, V, W) of the asynchronous motor are isolated from the operating voltage supply (L1, L2, L3), and a DC voltage is applied to at least two stator windings (U, V), a residual voltage across at least one stator winding (W), which does not have a DC voltage applied to it, being measured, and a braking current flowing for braking purposes through the stator windings (U, V), which have a DC voltage applied to them, being controlled as a function of the measured residual voltage.

## Revendications

1. Module de freinaqe pour un moteur asynchrone avec des moyens de commutation (S1, S2, S3) pour séparer les enroulements du stator (U, V, W) du moteur asynchrone de l'alimentation en tension de service (L1, L2, L3) et pour appliquer une tension continue sur au moins deux enroulements du stator (U, V) pour freiner le moteur asynchrone, avec une unité de mesure (9) pour mesurer une tension résiduelle sur au moins un enroulement du stator (W) auquel n'est pas appliquée une tension continue et avec une unité de commande (12) pour commander en fonction de la tension résiduelle mesurée un courant de freinage qui, pour assurer le freinage, circule à travers les enroulements du stator (U, V) auxquels est appliquée une tension continue.

2. Module de freinage selon la revendication 1, **caractérisé en ce que**, pour la commande du courant de freinage, l'unité de mesure (9) est configurée pour mesurer la tension résiduelle à intervalles réguliers.

3. Module de freinage selon l'une quelconque des revendications précédentes, **caractérisé en ce que** l'unizé de commande (12) est configurée pour commander le courant de freinage conformément à un programme de freinage déposé dans une mémoire (17) et déterminé auparavant pour différents moteurs asynchrones et/ou éléments à entraîner, alors que le programme de freinage est sélectionné en fonction de la tension résiduelle mesurée et/ou de la puissance du moteur qui a été réglée.

4. Module de freinage selon l'une quelconque des revendications précédentes, **caractérisé en ce que** l'unité de commande (12) est configurée pour sélectionner le courant de freinage déposé dans la mémoire (17) pour différentes tensions résiduelles en fonction de la tension résiduelle mesurée du moment.

5. Module de freinage selon l'une quelconque des revendications précédentes, **caractérisé en ce que** l'unité de commande (12) est configurée pour une modification par paliers du courant de freinage.

6. Module de freinage selon l'une quelconque des revendications précédentes, **caractérisé en ce que** l'unité de commande (12) est configurée pour un réglage adaptatif du courant de freinage en fonction de la tension résiduelle mesurée du moment.

7. Module de freinage selon l'une quelconque des revendications précédentes, **caracterisé en ce que** l'unité de commande (12) est configurée pour la mesure de la tension résiduelle sur un premier enroulement du stator (W) avant l'initialisation de l'opération de freinage et **en ce que** les moyens de commutation (S1, S2, S3) sont configurés pour séparer les enroulements du stator (U, V, W) de l'alimentation en tension de service (L1, L2, L3) et pour appliquer une tension continue redressée produite à partir de la tension de service en cas de concordance des phases de la tension résiduelle et de la tension de service utilisée pour produire la tension continue.

8. Module de freinage selon l'une quelconque des revendications précédentes, **caractérisé en ce que** des moyens (3) pour la surveillance de l'arrêt, pour la commutation étoile-triangle et pour la surveillance de la température des enroulements du moteur sont intégrés dans le module de freinage.

9. Module de freinage selon l'une quelconque des revendications précédentes, **caractérisé en ce que** l'unité de commande (12) est configurée de telle façon que le moteur soit freiné en moins de 10 secondes.

10. Module de freinage selon l'une quelconque des revendications précédentes, **caractérisé en ce que** le module de freinage est intégré avec un module de démarrage en douceur dans une unité compacte.

11. Module de freinage selon l'une quelconque des revendications précédentes, **caractérisé en ce que** des moyens (5) pour la correction du courant de freinage et/ou pour la surveillance des phases sont prévus.

12. Scie circulaire, en particulier scie circulaire de formatage avec un module de freinage selon l'une quelconque des revendications précédentes.

13. Procédé pour le freinage d'un moteur asynchrone dans lequel, pour assurer le freinage, les enroulements du stator (U, V, W) du moteur asynchrone sont séparés de l'alimentation en tension de service (L1, L2, L3) et une tension continue est appliquée sur au moins deux enroulements du stator (U, V), dans lequel une tension résiduelle est mesurée sur au moins un enroulement du stator (W) auqucl n'eat pas appliquée une tension continue et dans lequel un courant de freinage qui, pour assurer le freinage, circule à travers les enroulements du stator (U, V) auxquels est appliquée une tension continue est commandé en fonction de la tension résiduelle mesurée.
